# EUROPEAN PATENT APPLICATION

(11) **EP 4 517 892 A1**
(43) Date of publication of application: **05.03.2025**
(21) Application number: 23796330.1
(22) Date of filing: 24.04.2023
(51) Int. Cl.: H01M 10/04, H01M 10/052, H01M 10/0587, H01M 50/533, H01M 50/586, H01M 50/593

(54) **CYLINDRICAL BATTERY**

(30) Priority: 28.04.2022 JP 2022074311
(71) Applicant: Panasonic Energy Co., Ltd., Osaka 570-8511 (JP)
(72) Inventor: TAKANO, Akira, Moriguchi-shi, Osaka 570-8511 (JP)
(74) Representative: Eisenführ Speiser
(86) International application number: PCT/JP2023/016139
(87) International publication number: WO 2023/210590

(57) **Abstract**

A cylindrical battery (10) comprises: an electrode body (14) in which a positive electrode (11) and a negative electrode (12) are wound with a separator (13) therebetween; insulating plates (18, 19) facing the electrode body (14) in the axial direction; leads (20, 21) electrically connected to the electrode body (14); and a bottomed cylindrical exterior can (16) which accommodates the electrode body (14) and the insulating plates (18, 19). The insulating plates (18, 19) each have a body section (51, 61), and a cut-and-raised section (52, 62) that is cut and raised from the body section (51, 61). The leads (20, 21) respectively pass through the gaps produced by the formation of the cut-and-raised parts (52, 62).

## Description

### TECHNICAL FIELD

The present disclosure relates to a cylindrical battery.

### BACKGROUND ART

As a conventional cylindrical battery, there is a cylindrical battery described in Patent Literature 1. The cylindrical battery comprises an electrode assembly, an insulating plate disposed on a side of a sealing assembly in an axial direction of the electrode assembly, and a bottomed cylinder-shaped external can that accommodates the electrode assembly and the insulating plate. The insulating plate includes a through hole. A positive electrode lead that is led out from a positive electrode of the electrode assembly passes through the through hole and is then joined to an inner surface of the sealing assembly.

### CITATION LIST

### PATENT LITERATURE

PATENT LITERATURE 1: Japanese Unexamined Patent Application Publication No. 2016-001623

### SUMMARY

As in the aforementioned cylindrical battery, when the through hole is provided in the insulating plate to allow the positive electrode lead to pass through, the portion of the through hole cannot be covered by the insulating body, thereby reducing the insulating property around the through hole. Thus, it is an advantage of the present disclosure to provide a cylindrical battery capable of enhancing the insulating property around a lead led-out portion.

To solve the aforementioned problem, the cylindrical battery according to the present disclosure comprises: an electrode assembly in which a positive electrode and a negative electrode are wound with a separator therebetween; an insulating plate opposing the electrode assembly in an axial direction; a lead electrically connected to the electrode assembly; and a bottomed cylinder-shaped external can that accommodates the electrode assembly and the insulating plate, in which the insulating plate has a body section and a cut-and-raised part that is cut and raised from the body section, and the lead passes through a gap between the body section and the cut-and-raised part.

According to a cylindrical battery of the present disclosure, the insulating property around a lead led-out portion can be enhanced.

### BRIEF DESCRIPTION OF DRAWINGS

FIG. 1 is a sectional view in an axial direction of a cylindrical battery according to one embodiment of the present disclosure.
FIG. 2 is a perspective view of an electrode assembly of the aforementioned cylindrical battery.
FIG. 3 is a perspective view of an upper insulating plate and a positive electrode lead.
FIG. 4 is a sectional view taken along line A-A of FIG. 3 and a sectional view in the axial direction showing the upper insulating plate and the positive electrode lead.
FIG. 5 is a plan view of a lower insulating plate before a cut-and-raised part is cut and raised from a body section as viewed from above in the axial direction.
FIG. 6 is a plan view of a lower insulating plate of a first modification corresponding to FIG. 5.
FIG. 7 is a plan view of a lower insulating plate of a second modification corresponding to FIG. 5.
FIG. 8 is a plan view of a lower insulating plate of a third modification corresponding to FIG. 5.
FIG. 9 is a plan view of a lower insulating plate of a fourth modification corresponding to FIG. 5.
FIG. 10 is a plan view of a lower insulating plate of a fifth modification corresponding to FIG. 5.
FIG. 11 is a sectional view in the axial direction showing the lower insulating plate and a negative electrode lead of the fifth modification.
FIG. 12 is a plan view of a lower insulating plate of a sixth modification corresponding to FIG. 5.
FIG. 13 is a plan view of a lower insulating plate of a seventh modification corresponding to FIG. 5.

### DESCRIPTION OF EMBODIMENTS

Hereinafter, with reference to the drawings, an embodiment of a cylindrical battery according to the present disclosure will be described in detail. Note that the cylindrical battery of the present disclosure may be a primary battery or a secondary battery. Further, the cylindrical battery of the present disclosure may be a battery using an aqueous electrolyte or a battery using a non-aqueous electrolyte. Hereinafter, as a cylindrical battery 10 as one embodiment, a non-aqueous electrolyte secondary battery (lithium ion battery) using a non-aqueous electrolyte will be illustrated, but the cylindrical battery of the present disclosure is not limited thereto.

It has been initially expected that the characteristics of the embodiment and modification described below are appropriately combined to form a new embodiment. In the embodiment below, the same components in the drawings will be assigned the same reference signs and the overlapping descriptions will be omitted. Further, a plurality of drawings include schematic illustrations, and among the different drawings, the dimensional ratios in length, width, height, and the like of each member do not necessarily correspond. In the present specification, the side of a sealing assembly 17 in the axial direction (height direction) of the cylindrical battery 10 is assumed to be "up" and the side of a bottom 68 of an external can 16 in the axial direction is assumed to be "down." Further, of the constituent elements described below, the constituent elements that are not recited in independent claim showing the most generic concept are optional constituent elements, and not essential constituent elements. Further, the present disclosure is not limited to the following embodiment and modifications thereof, and various improvements and changes are available within the matters described in the scope of claims of the present application and the equivalents.

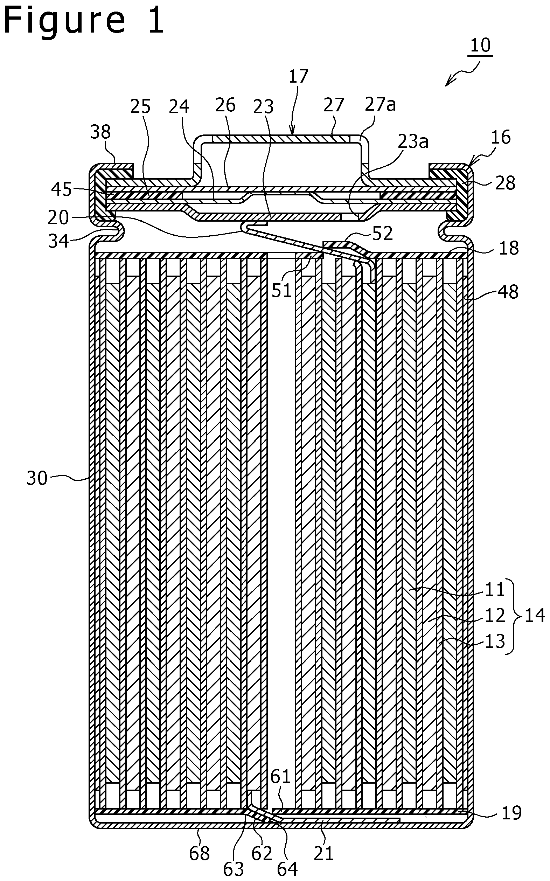

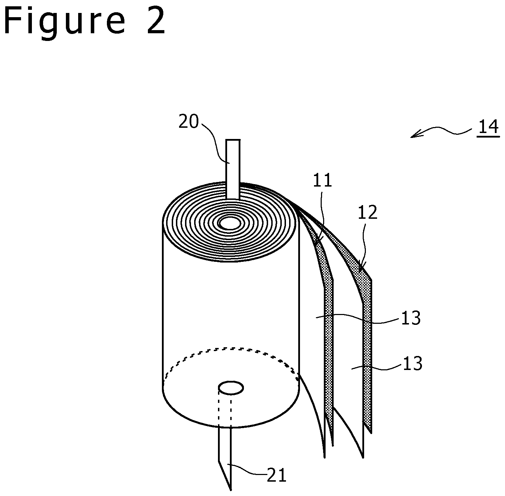

FIG. 1 is a sectional view in the axial direction of the cylindrical battery 10 according to one embodiment of the present disclosure, and FIG. 2 is a perspective view of an electrode assembly 14 of the cylindrical battery 10. As shown in FIG. 1, the cylindrical battery 10 comprises the wound-type electrode assembly 14, a non-aqueous electrolyte (not shown), a bottomed cylinder-shaped metal external can 16 that accommodates the electrode assembly 14 and the non-aqueous electrolyte, and the sealing assembly 17 that seals an opening of the external can 16. As shown in FIG. 2, the electrode assembly 14 has a wound structure in which a long positive electrode 11 and a long negative electrode 12 are wound with two long separators 13.

The negative electrode 12 is formed in dimensions slightly larger than the positive electrode 11 in order to prevent lithium deposition. In other words, the negative electrode 12 is formed longer in the longitudinal direction and in the width direction (lateral direction) than the positive electrode 11. Further, the two separators 13 are formed in dimensions slightly larger than at least the positive electrode 11 and are disposed, for example, so as to sandwich the positive electrode 11. The negative electrode 12 may form a winding-start end of the electrode assembly 14. However, in general, the separator 13 extends beyond an end on a winding-start side of the negative electrode 12, and an end on a winding-start side of the separator 13 becomes the winding-start end of the electrode assembly 14.

The non-aqueous electrolyte includes a non-aqueous solvent and electrolyte salt dissolved in the non-aqueous solvent. For the non-aqueous solvent, for example, esters, ethers, nitriles, amides, and any mixed solvent of two or more thereof may be used. The non-aqueous solvent may contain a halogen-substituted product formed by replacing at least a portion of a hydrogen atom of any of these solvents with a halogen atom such as fluorine. Note that the non-aqueous electrolyte is not limited to a liquid electrolyte and may be a solid electrolyte using a gel polymer or the like. For the electrolyte salt, lithium salt such as LiPF₆ is used.

The positive electrode 11 includes a positive electrode core and positive electrode mixture layers formed on both sides of the positive electrode core. For the positive electrode core, metal foil stable in a potential range of the positive electrode 11, such as aluminum and an aluminum alloy, a film with the metal disposed on the surface layer, and the like can be used. The positive electrode mixture layers include a positive electrode active material, a conductive agent, and a binding agent. The positive electrode 11 can be produced, for example, such that the positive electrode core is coated with positive electrode mixture slurry including the positive electrode active material, the conductive agent, the binding agent, and the like, and the coating is dried and is then compressed so that the positive electrode mixture layers are formed on both sides of the positive electrode core.

The positive electrode active material includes a lithium-containing metal complex oxide as a main component. Examples of the metal element contained in the lithium-containing metal complex oxide may include Ni, Co, Mn, Al, B, Mg, Ti, V, Cr, Fe, Cu, Zn, Ga, Sr, Zr, Nb, In, Sn, Ta, and W. A preferable example of the lithium-containing metal complex oxide is a complex oxide containing at least one of the group consisting of Ni, Co, Mn, and Al.

Examples of the conductive agent included in the positive electrode mixture layer may include a carbon material, such as carbon black, acetylene black, ketjen black, and graphite. Examples of the binding agent included in the positive electrode mixture layer may include a fluorocarbon resin, such as polytetrafluoroethylene (PTFE) and polyvinylidene fluoride (PVdF), polyacrylonitrile (PAN), a polyimide resin, an acrylic resin, and a polyolefin resin. These resins and carboxymethylcellulose (CMC) or a cellulose derivative such as carboxymethylcellulose salt, a polyethylene oxide (PEO), and the like may be concurrently used.

The negative electrode 12 includes a negative electrode core and negative electrode mixture layers formed on both sides of the negative electrode core. For the negative electrode core, metal foil stable in a potential range of the negative electrode 12, such as copper and a copper alloy, a film with the metal disposed on the surface layer, and the like can be used. The negative electrode mixture layers include a negative electrode active material and a binding agent. The negative electrode 12 can be produced, for example, such that the negative electrode core is coated with negative electrode mixture slurry including the negative electrode active material, the binding agent, and the like, and the coating is dried and is then compressed so that the negative electrode mixture layers are formed on both sides of the negative electrode core.

For the negative electrode active material, a carbon material that reversibly occludes and releases lithium ions is generally used. The preferable carbon material is graphite, such as natural graphite such as flake graphite, massive graphite, and amorphous graphite, artificial graphite such as massive artificial graphite and graphitized mesophase carbon microbeads. The negative electrode mixture layer may include, as the negative electrode active material, a Si material-containing silicon (Si). In addition, for the negative electrode active material, metal to be alloyed with lithium other than Si, an alloy containing the metal, a compound containing the metal, and the like may be used.

For the binding agent included in the negative electrode mixture layer, a fluorocarbon resin, PAN, a polyimide resin, an acrylic resin, a polyolefin resin, and the like may be used, as with the case of the positive electrode 11, but styrene butadiene rubber (SBR) or a modified product thereof is preferably used. For the negative electrode mixture layer, for example, in addition to SBR or the like, CMC or CMC salt, polyacrylic acid (PAA) or polyacrylic acid salt, and polyvinyl alcohol may be included.

For the separator 13, a porous sheet having ion permeability and insulating property is used. Specific examples of the porous sheet may include a microporous thin film, cloth, and a nonwoven fabric. As a material of the separator 13, a polyolefin resin such as polyethylene and polypropylene, cellulose, and the like are preferable. The separator 13 may be in either a single layer structure or a stacked layer structure. On the surface of the separator 13, a heat-resistant layer and the like may be formed.

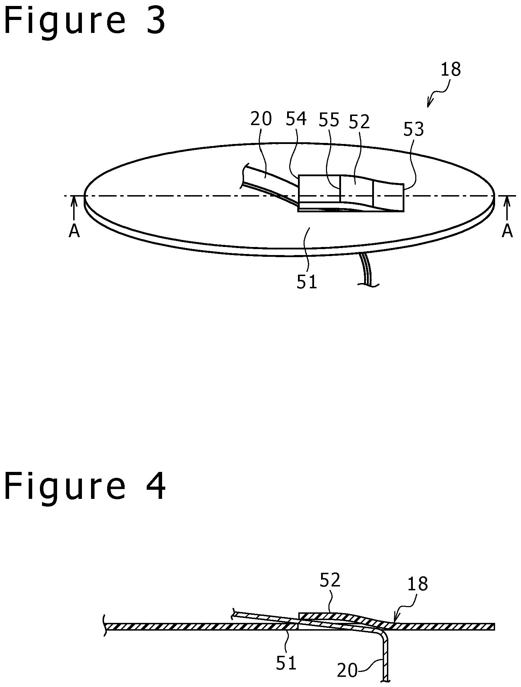

As shown in FIG. 1, a positive electrode lead 20 is joined to the positive electrode 11 and a negative electrode lead 21 is joined to a winding-start side of the negative electrode 12. The cylindrical battery 10 includes an upper insulating plate 18 on an upper side of the electrode assembly 14 and a lower insulating plate 19 on a lower side of the electrode assembly 14. The upper insulating plate 18 and the lower insulating plate 19 each oppose the electrode assembly 14 in the axial direction. The positive electrode lead 20 passes between a body section 51 and a cut-and-raised part 52 of the upper insulating plate 18 to extend toward the sealing assembly 17, and the negative electrode lead 21 passes between a body section 61 and a cut-and-raised part 62 of the lower insulating plate 19 to extend toward the bottom 68 of the external can 16. The structures of the cut-and-raised parts 52, 62 will be described in detail later with reference to FIG. 3 and the following drawings.

The positive electrode lead 20 is joined to an underside of a sealing plate 23 of the sealing assembly 17 by welding or the like. A terminal cap 27 forming a top plate of the sealing assembly 17 is electrically connected to the sealing plate 23 and the terminal cap 27 serves as a positive electrode terminal. Further, the negative electrode lead 21 is joined to an inner surface of the bottom 68 of the metal external can 16 by laser welding or the like and the external can 16 serves as a negative electrode terminal. The upper insulating plate 18 may include a through hole at a center in the radial direction for injection of an electrolyte solution. Further, the lower insulating plate 19 may also include a through hole at a center in the radial direction, and the negative electrode lead 21 may be joined to the inner surface of the bottom 68 using the through hole by resistance welding.

In the present embodiment, the positive electrode lead 20 is electrically connected to a middle section such as a center in a winding direction of the positive electrode core. Further, the negative electrode lead 21 is electrically connected to an end on the winding-start side of the negative electrode core, and an end on a winding-end side 48 of the negative electrode core is brought into contact with the inner surface of the external can 16. In this manner, the winding-start side and the winding-end side of the negative electrode 12 are both electrically connected to the negative electrode terminal so that the current path is reduced, thereby reducing the electric resistance. However, without bringing the end on the winding-end side of the negative electrode core into contact with the inner surface of the external can, one negative electrode lead may be electrically connected to a middle section such as a center in the winding direction of the negative electrode core and one negative electrode lead may be electrically connected to the end on the winding-end side of the negative electrode core. Alternatively, the electrode assembly may include two negative electrode leads, with one negative electrode lead electrically connected to the end on the winding-start side of the negative electrode core and with the other negative electrode lead electrically connected to the end on the winding-end side of the negative electrode core. Alternatively, without using the negative electrode lead, the negative electrode and the external can may be electrically connected with each other by bring the end on the winding-end side of the negative electrode core into contact with the inner surface of the external can.

The cylindrical battery 10 further comprises a resin gasket 28 disposed between the external can 16 and the sealing assembly 17. The sealing assembly 17 is fixed by crimping at the opening of the external can 16 via the gasket 28. In this manner, an interior space of the cylindrical battery 10 is sealed. The gasket 28 is sandwiched between the external can 16 and the sealing assembly 17 and insulates the sealing assembly 17 from the external can 16. The gasket 28 has a function as a sealing material to maintain the air tightness inside the battery and a function as an insulating material to insulate between the external can 16 and the sealing assembly 17.

The external can 16 accommodates the electrode assembly 14 and the non-aqueous electrolyte and includes a shoulder 38, a grooved portion 34, a cylinder-shaped portion 30, and the bottom 68. The grooved portion 34 can be formed by, for example, spinning a portion of a side wall of the external can 16 radially inward so as to annularly dent the portion radially inward. The shoulder 38 is formed such that in fixing the sealing assembly 17 to the external can 16 by crimping, an upper end of the external can 16 is inwardly folded toward a circumferential edge 45 of the sealing assembly 17.

The sealing assembly 17 has a structure in which the sealing plate 23, a lower vent member 24, an insulating member 25, an upper vent member 26, and the terminal cap 27 are stacked in this order from the electrode assembly 14 side. The members forming the sealing assembly 17 have, for example, a disc-shape or a ring-shape, and are electrically connected to one another, except for the insulating member 25. The sealing plate 23 includes at least one through-hole 23a. Further, the lower vent member 24 and the upper vent member 26 are connected at the respective centers and the insulating member 25 is interposed between the respective circumferential edges.

When the cylindrical battery 10 extremely generates heat to increase the internal pressure of the cylindrical battery 10, the lower vent member 24 is deformed so as to push up the upper vent member 26 toward the terminal cap 27 and breaks, so that the current path between the lower vent member 24 and the upper vent member 26 is disrupted. When the internal pressure further increases, the upper vent member 26 breaks, thereby discharging gas through a through-hole 27a of the terminal cap 27. By discharging the gas, the cylindrical battery 10 can be prevented from rupturing due to an excessive increase in the internal pressure of the cylindrical battery 10, thereby being able to improve the safety of the cylindrical battery 10.

Next, the structure of the upper insulating plate 18 will be described in detail. FIG. 3 is a perspective view of the upper insulating plate 18 and the positive electrode lead 20, and FIG. 4 is a sectional view taken along line A-A of FIG. 3 and a sectional view in the axial direction showing the upper insulating plate 18 and the positive electrode lead 20. As shown in FIG. 3, the upper insulating plate 18 includes the body section 51 and the cut-and-raised part 52 that is cut and raised from the body section 51. Specifically, the upper insulating plate 18 has a structure in which on a disk plate formed of an insulating material, a slit is made which is formed by a pair of parallel lines having the same length and a straight line connecting ends of the pair of parallel lines on one side. The upper insulating plate 18 has a structure in which a portion enclosed by the slit is cut and raised so as to be away from the electrode assembly 14. A root 53 of the cut-and-raised part 52 is positioned on an outer side in the radial direction relative to a tip end 54 of the cut-and-raised part 52.

The cut-and-raised part 52 has a substantially rectangular shape in a plan view, and extends in the radial direction of the cylindrical battery 10. As shown in FIGS. 1,3, and 4, the positive electrode lead 20 is inwardly folded in the radial direction and passes through a gap, which is created by forming the cut-and-raised part 52, between the body section 51 and the cut-and-raised part 52. According to the cylindrical battery 10, since the cut-and-raised part 52 is provided in the upper insulating plate 18, the surroundings of a led-out portion of the positive electrode lead 20 can be covered by the upper insulating plate 18 as compared to a case in which a through hole is provided in the upper insulating plate. Further, since a site around a portion led out from the electrode assembly 14 of the positive electrode lead 20 can be restrained by the body section 51 and the cut-and-raised part 52, even when the cylindrical battery 10 receives external force to vibrate or the like, the site around the portion led out is less likely to fluctuate. As a result, the short circuit around the led-out portion can be suppressed. Accordingly, the insulating property of the led-out portion of the positive electrode lead 20 can be enhanced.

Further, the cut-and-raised part 52 is cut and raised so as to be away from the electrode assembly 14 and the root 53 of the cut-and-raised part 52 is positioned on the outer side in the radial direction relative to the tip end 54 of the cut-and-raised part 52. Therefore, since the cut-and-raised part 52 is not cut and raised toward the positive electrode lead 20, the positive electrode lead 20 is not caught in the cut-and-raised part 52 and the cut-and-raised part 52 does not hinder the positive electrode lead 20 from bending. Accordingly, the degree of freedom in bending of the positive electrode lead 20 can be increased, thereby enabling the positive electrode lead 20 to be easily joined to a predetermined site of the sealing assembly 17.

Note that the cut-and-raised part may be cut and raised so as to approach the electrode assembly 14 or the root of the cut-and-raised part may be positioned on an inner side in the radial direction relative to the tip end of the cut-and-raised part. Further, as shown in FIG. 3, when the cut-and-raised part 52 that is cut and raised from the body section 51 of the upper insulating plate 18 is provided with a fold 55 toward the body section 51 in the axial direction, the positive electrode lead 20 is easily firmly restrained by the cut-and-raised part 52 and the body section 51.

As shown in FIG. 1, the lower insulating plate 19 also includes the body section 61 and the cut-and-raised part 62 that is cut and raised from the body section 61. The cut-and-raised part 62 is also cut and raised from the body section 61 as to be away from the electrode assembly 14 and a root 63 of the cut-and-raised part 62 is positioned on an outer side in the radial direction relative to a tip end 64 of the cut-and-raised part 62. Further, the negative electrode lead 21 is inwardly folded in the radial direction and passes through a gap, which is created by forming the cut-and-raised part 62, between the body section 61 and the cut-and-raised part 62.

Therefore, a wide area of an end face of the electrode assembly 14 can be covered by the lower insulating plate 19 and a site around a portion led out from the electrode assembly 14 of the negative electrode lead 21 can be restrained by the body section 61 and the cut-and-raised part 62. Thus, as with the positive electrode lead 20, the short circuit around the led-out portion of the negative electrode lead 21 can be suppressed. Further, since the cut-and-raised part 62 is not cut and raised toward the negative electrode lead 21, the cut-and-raised part 62 does not hinder the negative electrode lead 21 from bending. Accordingly, as with the positive electrode lead 20, the degree of freedom in bending of the negative electrode lead 21 can be increased, thereby enabling the negative electrode lead 21 to be easily joined to a predetermined site on the inner surface of the bottom 68 of the external can 16.

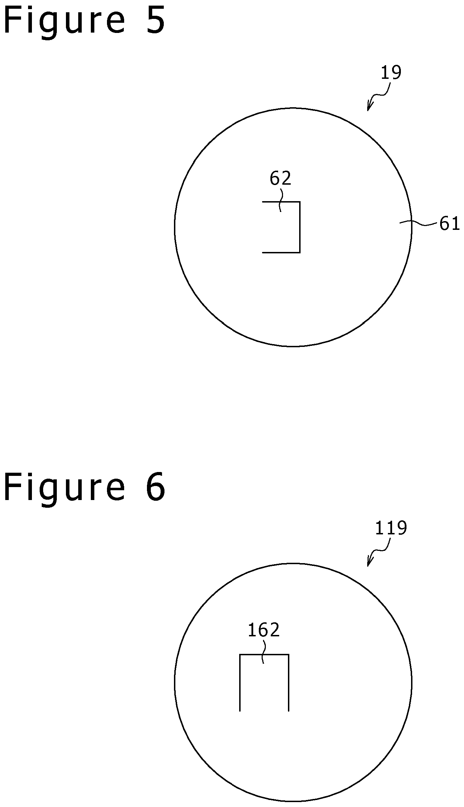

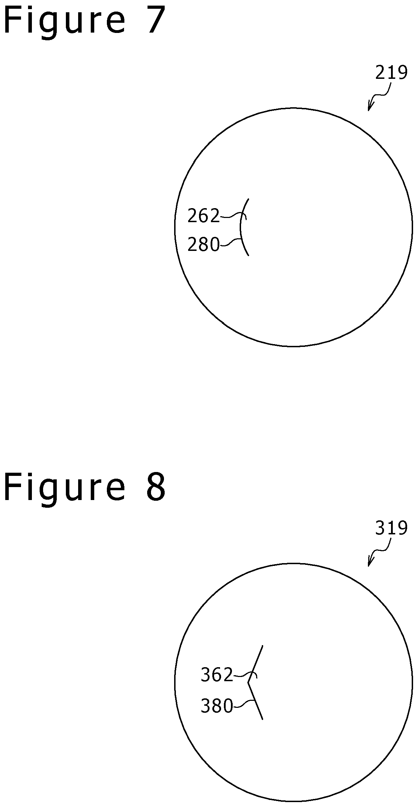

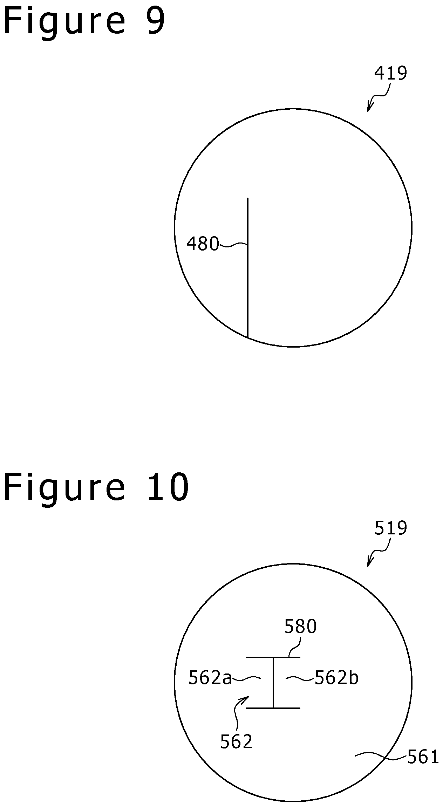

FIG. 5 is a plan view of the lower insulating plate 19 before the cut-and-raised part 62 is cut and raised from the body section 61 as viewed from above in the axial direction, and FIG. 6 is a plan view of a lower insulating plate 119 of a first modification corresponding to FIG. 5. Further, FIG. 7 is a plan view of a lower insulating plate 219 of a second modification corresponding to FIG. 5, FIG. 8 is a plan view of a lower insulating plate 319 of a third modification corresponding to FIG. 5, and FIG. 9 is a plan view of a lower insulating plate 419 of a fourth modification corresponding to FIG. 5.

As shown in FIG. 5, in the aforementioned embodiment, the cut-and-raised part 62 that is substantially rectangular in a plan view extends substantially parallel to a portion of the negative electrode lead that passes through the cut-and-raised part 62 in a plan view. However, as shown in FIG. 6, a cut-and-raised part 162 that is substantially rectangular in a plan view may extend substantially orthogonal to an extending direction of a portion of the negative electrode lead that passes through the cut-and-raised part 162 in a plan view. Further, as shown in FIG. 7, a cut-and-raised part 262 may be formed by cutting and raising an arc-shaped slit 280, and the cut-and-raised part 262 may extend substantially parallel to a portion of the negative electrode lead that passes through the cut-and-raised part 262 in a plan view.

Alternatively, as shown in FIG. 8, a cut-and-raised part 362 may be formed by cutting and raising a slit 380 that is in a V-shape in a plan view, and the cut-and-raised part 362 may extend substantially parallel to a portion of the negative electrode lead that passes through the cut-and-raised part 362 in a plan view. Alternatively, as shown in FIG. 9, a slit 480 may be formed with a straight line, one end of which reaches an outer rim of a lower insulating plate 419, and the cut-and-raised part may be formed such that with the straight line as a boundary, one end side of the straight line in a region on one side is cut and raised against a region on the other side.

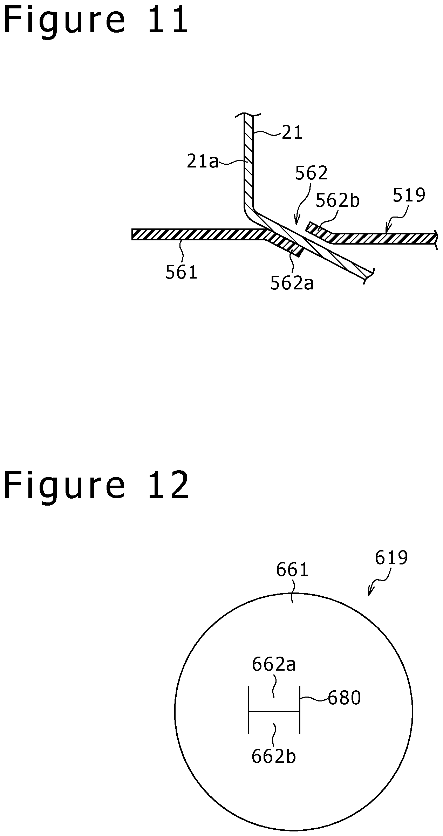

Alternatively, as shown next, the cut-and-raised part may include a pair of cut-and-raised parts. FIG. 10 is a plan view of a lower insulating plate 519 of a fifth modification corresponding to FIG. 5, and FIG. 11 is a sectional view in the axial direction showing the lower insulating plate 519 and the negative electrode lead 21 that passes therethrough. As shown in FIG. 10, an H-shaped slit 580 may be provided in the lower insulating plate 519, and a cut-and-raised part 562 may include a pair of cut-and-raised parts 562a, 562b opposing each other in the radial direction. Further, as shown in FIG. 11, an outer side cut-and-raised part 562a that is positioned on an outer side in the radial direction among the pair of cut-and-raised parts 562a, 562b is cut and raised from the body section 561 so as to be away from the electrode assembly 14 and an inner side cut-and-raised part 562b that is positioned on an inner side in the radial direction among the pair of cut-and-raised parts 562a, 562b may be cut and raised from the body section 561 so as to approach the electrode assembly 14. Further, the negative electrode lead 21 passes through a gap between the body section 561 and the cut-and-raised parts 562a, 562b.

According to the present modification, since the cut-and-raised part 562 includes the pair of cut-and-raised parts 562a, 562b opposing each other in the radial direction, the height of the inner side cut-and-raised part 562b that is cut and raised so as to approach the electrode assembly 14 can be lowered, so that the distance in the axial direction between the lower insulating plate 519 and the electrode assembly 14 can be reduced. Therefore, in the negative electrode lead 21, an exposed space of a portion 21a on the electrode assembly side (see FIG. 11) positioned on the side of the electrode assembly 14 relative to the lower insulating plate 519 can be reduced, so that the length of the portion 21a on the electrode assembly side can be reduced. Accordingly, the degree of freedom in displacement of the portion 21a on the electrode assembly side can be reduced, so that the negative electrode lead 21 can be surely prevented from contacting the positive electrode 11 of the electrode assembly 14, thereby being able to enhance the insulating property.

Further the outer side cut-and-raised part 562a that is positioned on the outer side in the radial direction among the pair of cut-and-raised parts 562a, 562b is cut and raised so as to be away from the electrode assembly 14, and thus, the degree of freedom in bending of the negative electrode lead 21 can be increased, so that the negative electrode lead 21 can be easily and naturally inwardly folded in the radial direction and the negative electrode lead 21 can be easily joined to a predetermined site on the inner surface of the bottom 68 of the external can 16.

Regarding the pair of cut-and-raised parts opposing each other in the radial direction, the outer side cut-and-raised part that is positioned on the outer side in the radial direction may be cut and raised so as to approach the electrode assembly and the inner side cut-and-raised part that is positioned on the inner side in the radial direction may be cut and raised so as to be away from the electrode assembly. Alternatively, the pair of cut-and-raised parts opposing each other in the radial direction may be cut and raised on the same side in the axial direction.

Alternatively, as shown in FIG. 12, i.e., a plan view of a lower insulating plate 619 of a sixth modification corresponding to FIG. 5, an H-shaped slit 680 may be provided in the lower insulating plate 619. Further, a pair of cut-and-raised parts 662a, 662b may be provided so as to oppose each other in a direction substantially orthogonal to an extending direction of a portion of the negative electrode lead that passes through the pair of cut-and-raised parts 662a, 662b in a plan view. Furthermore, the pair of cut-and-raised parts 662a, 662b may be cut and raised from a body section 661 in different directions from each other in the axial direction or may be cut and raised in the same direction in the axial direction. Further, the negative electrode lead 21 passes through a gap between the body section 661 and the cut-and-raised parts 662a, 662b.

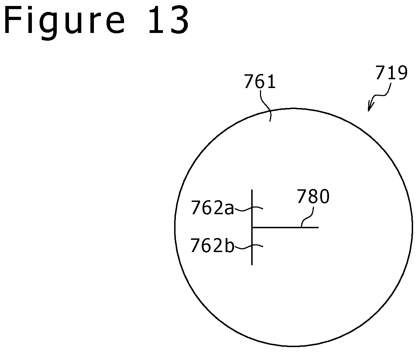

Alternatively, as shown in FIG. 13, i.e., a plan view of a lower insulating plate 719 of a seventh modification corresponding to FIG. 5, a T-shaped slit 780 may be provided in the lower insulating plate 719. Further, a pair of cut-and-raised parts 762a, 762b may be provided so as to oppose each other in a direction substantially orthogonal to an extending direction of the negative electrode lead 21 in a plan view. Furthermore, the pair of cut-and-raised parts 762a, 762b may be cut and raised from a body section 761 in different directions from each other in the axial direction or may be cut and raised in the same direction in the axial direction. Further, the negative electrode lead 21 passes through a gap between the body section 761 and the cut-and-raised parts 762a, 762b.

The shapes of the cut-and-raised parts shown in FIG. 5 to FIG. 13 may be applied to the upper insulating plate. In the present embodiment, the case has been described in which the upper insulating plate 18 and the lower insulating plate 19 are both provided with the cut-and-raised parts 52, 62, respectively. However, the cylindrical battery may comprise the upper insulating plate and the lower insulating plate and only one of the insulating plates may be provided with the cut-and-raised part. Alternatively, the cylindrical battery may include only one of the upper insulating plate and the lower insulating plate, and the one insulating plate may be provided with the cut-and-raised part.

### REFERENCE SIGNS LIST

10 Cylindrical battery, 11 Positive electrode, 12 Negative electrode, 13 Separator, 14 Electrode assembly, 16 External can, 17 Sealing assembly, 18 Upper insulating plate, 19, 119, 219, 319, 419, 519, 619, 719 Lower insulating plate, 20 Positive electrode lead, 21 Negative electrode lead, 21a Portion on electrode assembly side, 23 Sealing plate, 23a Through hole, 24 Lower vent member, 25 Insulating member, 26 Upper vent member, 27 Terminal cap, 27a Through hole, 28 Gasket, 30 Cylinder-shaped portion, 34 Grooved portion, 38 Shoulder, 45 Circumferential edge, 48 End on winding-end side of negative electrode core, 51 Body section of upper insulating body, 52 Cut-and-raised part of upper insulating body, 53 Root of cut-and-raised part of upper insulating body, 54 Tip end of cut-and-raised part of upper insulating body, 55 Fold of cut-and-raised part of upper insulating body, 61, 561, 661, 761 Body section of lower insulating body, 62, 162, 262, 362, 562, 662a, 662b, 762a, 762b Cut-and-raised part of lower insulating body, 63 Root of cut-and-raised part of lower insulating bod, 64 Tip end of cut-and-raised part of lower insulating body, 68 Bottom, 280, 380, 480, 580, 680, 780 Slit, 562a Outer side cut-and-raised part, 562b Inner side cut-and-raised part

## Claims

1. A cylindrical battery comprising:
an electrode assembly in which a positive electrode and a negative electrode are wound with a separator therebetween;
an insulating plate opposing the electrode assembly in an axial direction;
a lead electrically connected to the electrode assembly; and
a bottomed cylinder-shaped external can that accommodates the electrode assembly and the insulating plate
wherein the insulating plate includes a body section and a cut-and-raised part that is cut and raised from the body section, and
the lead passes through a gap between the body section and the cut-and-raised part.

2. The cylindrical battery according to claim 1, wherein
the lead is inwardly folded in a radial direction,
a root of the cut-and-raised part is positioned on an outer side in the radial direction relative to a tip end of the cut-and-raised part, and
the cut-and-raised part is cut and raised so as to be away from the electrode assembly.

3. The cylindrical battery according to claim 1, wherein
the cut-and-raised part comprises a pair of cut-and-raised parts opposing each other in a radial direction,
an outer side cut-and-raised part that is positioned on an outer side in the radial direction among the pair of cut-and-raised parts is cut and raised so as to be away from the electrode assembly, and
an inner side cut-and-raised part that is positioned on an inner side in the radial direction among the pair of cut-and-raised parts is cut and raised so as to approach the electrode assembly.
